# EUROPEAN PATENT APPLICATION

(11) **EP 4 674 741 A1**
(43) Date of publication of application: **07.01.2026**
(21) Application number: 25181391.1
(22) Date of filing: 06.06.2025
(51) Int. Cl.: B62J 11/04, B60N 3/10

(54) **AUTOMATIC LOCKING BOTTLE HOLDER**

(30) Priority: 01.07.2024 CN 202421536792 U
(71) Applicant: Shima Technology (Guangdong) Co., Ltd., Jiangmen City 529000 (CN)
(72) Inventor: XIA, Xingli, 476200 Chenqingji town (CN)
(74) Representative: Diaz Nunez, Joaquin

(57) **Abstract**

The present invention relates to the technical field of bottle holders, and specifically, to an automatic locking bottle holder. The automatic locking bottle holder includes a main bottle bracket (1), a mounting adapter plate (2), a spring (3), a fixed arm (5, 6), and a movable plate (4), where the mounting adapter plate is mounted on the main bottle bracket, the main bottle bracket is rotatably connected to the fixed arm via the spring, an end of the fixed arm is rotatably connected to the movable plate, and the main bottle bracket and the movable plate are arranged parallel to each other. According to the present invention, the bottle is fastened to the main bottle bracket through the coordination of the spring, the fixed arm, and the movable plate, making it both stable and aesthetically pleasing. This prevents bottle falling caused by vibrations, thereby significantly improving user convenience.

## Description

### TECHNICAL FIELD

The present invention relates to the technical field of bottle holders, and in particular, to an automatic locking bottle holder.

### BACKGROUND

A motorcycle bottle holder is a component fixedly mounted on a motorcycle for holding a water bottle. Nowadays, most motorcycle riders carry water bottles during trips, but the sizes and shapes of the bottles vary significantly among individuals. A small number of riders also carry various bottled beverages. However, there are currently no bottle holders specifically designed for motorcycle riders on the market, and they have to use bicycle bottle holders instead. The bicycle bottle holder is often rigidly fastened to the edge of the motorcycle, making it neither stable nor aesthetically pleasing. In addition, intense vibrations during rides cause bottles to fall off or even get lost, creating significant inconvenience for the riders.

### SUMMARY

The present invention aims to resolve the technical deficiencies in the prior art by providing an automatic locking bottle holder. A bottle is fastened to a main bottle bracket through the coordination of a spring, a fixed arm, and a movable plate, making it both stable and aesthetically pleasing. This prevents bottle falling caused by vibrations, thereby significantly improving user convenience.

To resolve the foregoing technical problem, the following technical solutions of the present invention are provided.

An automatic locking bottle holder is provided, including a main bottle bracket, a mounting adapter plate, a spring, a fixed arm, and a movable plate, where the mounting adapter plate is mounted on the main bottle bracket, the main bottle bracket is rotatably connected to the fixed arm via the spring, an end of the fixed arm is rotatably connected to the movable plate, and the main bottle bracket and the movable plate are arranged parallel to each other.

Preferably, the fixed arm includes a first fixed arm and a second fixed arm, and the first fixed arm and the second fixed arm are respectively rotatably connected to the main bottle bracket and the movable plate.

Preferably, an inner side of the main bottle bracket is provided with an enclosure cover plate and a plurality of first non-slip silicone pads, and an inner side of the movable plate is provided with a plurality of second non-slip silicone pads.

Preferably, an outer side of the main bottle bracket is provided with a plurality of fixed arm snap-in grooves that are compatible with the fixed arm.

Preferably, the mounting adapter plate is disposed on an outer side of the main bottle bracket, and the mounting adapter plate is provided with a mounting groove and a plurality of mounting through-holes.

Preferably, the mounting groove is embedded with multi-angle adjustment teeth.

According to the foregoing technical solutions, the automatic locking bottle holder provided in the present invention has the following beneficial effects. The mounting adapter plate in the automatic locking bottle holder is mounted on the main bottle bracket, the main bottle bracket is rotatably connected to the fixed arm via the spring, the end of the fixed arm is rotatably connected to the movable plate, and the main bottle bracket and the movable plate are arranged parallel to each other. During use, the bottle is placed against the inner side of the main bottle bracket, then the movable plate is pushed upward, and the movable plate drives the fixed arm to rotate upward. Under the action of the spring, the fixed arm tightly presses the movable plate against the bottle, thereby achieving automatic locking of the bottle. The bottle is fastened to the main bottle bracket through the coordination of the spring, the fixed arm, and the movable plate, making it both stable and aesthetically pleasing. This prevents bottle falling caused by vibrations, thereby significantly improving user convenience.

### BRIEF DESCRIPTION OF DRAWINGS

FIG. 1 is an exploded view according to the present invention;
FIG. 2 is a perspective view in an open state according to the present invention; and
FIG. 3 is a perspective view in a closed state according to the present invention.

In the figure, 1-main bottle bracket, 2-mounting adapter plate, 3-spring, 4-movable plate, 5-first fixed arm, 6-second fixed arm, 7-enclosure cover plate, 8-first non-slip silicone pad, 9-second non-slip silicone pad, 10-fixed arm snap-in groove, 11-mounting groove, 12-mounting through-hole, and 13-multi-angle adjustment teeth.

### DETAILED DESCRIPTION OF EMBODIMENTS

The following further describes specific embodiments of the present invention with reference to the accompanying drawings. It should be noted herein that, the descriptions of the embodiments are intended to facilitate the understanding of the present invention, but does not constitute a limitation on the present invention. In addition, the technical features described in the various embodiments of the present invention below may be mutually combined, provided that such combinations do not conflict with one another.

In the descriptions of the present invention, it should be understood that, an orientation or a position relationship indicated by terms such as "center", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial", and "circumferential" depends on an orientation or a position relationship shown in the accompanying drawings, and the terms are only intended for the purpose of describing the present invention and simplifying the descriptions, rather than indicating or implying that the referred device or component must have a specific orientation, or be constructed and operated in a specific orientation, and therefore cannot be construed as a limitation on the present invention.

In addition, the terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include at least one feature. In the descriptions of the present invention, unless otherwise specifically limited, the term "a plurality of" means at least two, for example, two, three, or the like.

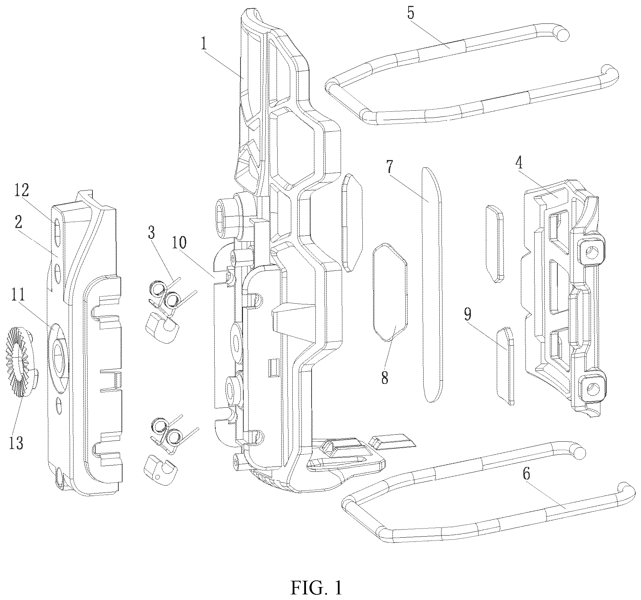

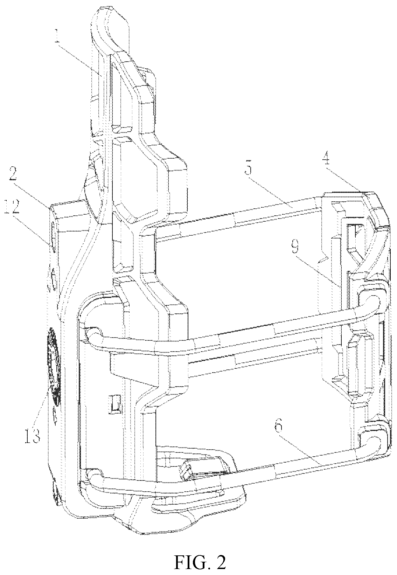

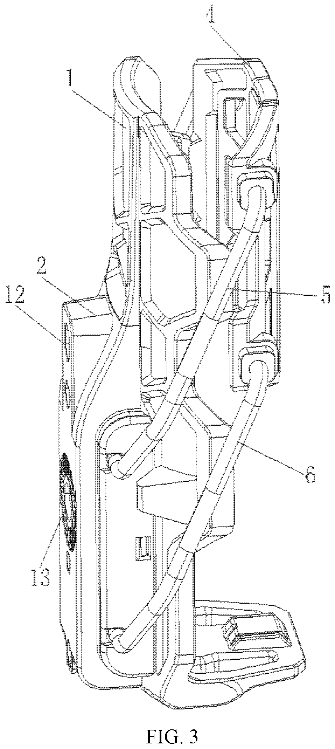

As shown in FIG. 1 to FIG. 3, an automatic locking bottle holder includes a main bottle bracket 1, a mounting adapter plate 2, a spring 3, a fixed arm, and a movable plate 4. The mounting adapter plate 2 is mounted on the main bottle bracket 1, the main bottle bracket 1 is rotatably connected to the fixed arm via the spring 3, an end of the fixed arm is rotatably connected to the movable plate 4, and the main bottle bracket 1 and the movable plate 4 are arranged parallel to each other. It can be understood that, the spring 3 may be a torsion spring, or the like. The main bottle bracket 1, the mounting adapter plate 2, and the movable plate 4 may all be made of hard plastic materials. This is not limited in the present invention.

Specifically, the fixed arm includes a first fixed arm 5 and a second fixed arm 6, and the first fixed arm 5 and the second fixed arm 6 are respectively rotatably connected to the main bottle bracket 1 and the movable plate 4. An inner side of the main bottle bracket 1 is provided with an enclosure cover plate 7 and a plurality of first non-slip silicone pads 8, and an inner side of the movable plate 4 is provided with a plurality of second non-slip silicone pads 9. An outer side of the main bottle bracket 1 is provided with a plurality of fixed arm snap-in grooves 10 that are compatible with the fixed arm. The mounting adapter plate 2 is disposed on an outer side of the main bottle bracket 1, and the mounting adapter plate 2 is provided with a mounting groove **11** and a plurality of mounting through-holes 12. The main bottle bracket 1 may be fastened to a motorcycle rack through the mounting adapter plate 2. The mounting groove 11 is embedded with multi-angle adjustment teeth 13. It can be understood that, the first non-slip silicone pad 8 and the second non-slip silicone pad 9 can both be made of silicone materials for protecting the bottle. During use, the bottle is placed against the inner side of the main bottle bracket 1, then the movable plate 4 is pushed upward, and the movable plate 4 drives the fixed arm to rotate upward. Under the action of the spring 3, the fixed arm tightly presses the movable plate 4 against the bottle, thereby achieving automatic locking of the bottle. To remove the bottle, the movable plate 4 is pushed backward to disengage from the bottle.

It can be understood that, the bottle holder in the present invention is rationally designed and structurally unique. The bottle is fastened to the main bottle bracket 1 through the coordination of the spring 3, the fixed arm, and the movable plate 4, making it both stable and aesthetically pleasing. This prevents bottle falling caused by vibrations, thereby significantly improving user convenience.

The foregoing provides detailed descriptions of the embodiments of the present invention with reference to the accompanying drawings, but the present invention is not limited to the embodiments. For a person skilled in the art, various changes, modifications, substitutions, and alterations to the embodiments without departing from the spirit and scope of the present invention shall still fall within the protection scope of the present invention.

## Claims

1. An automatic locking bottle holder, comprising a main bottle bracket (1), a mounting adapter plate (2), a spring (3), a fixed arm, and a movable plate (4), wherein the mounting adapter plate (2) is mounted on the main bottle bracket (1), the main bottle bracket (1) is rotatably connected to the fixed arm via the spring (3), an end of the fixed arm is rotatably connected to the movable plate (4), and the main bottle bracket (1) and the movable plate (4) are arranged parallel to each other.

2. The automatic locking bottle holder according to claim 1, wherein the fixed arm comprises a first fixed arm (5) and a second fixed arm (6), and the first fixed arm (5) and the second fixed arm (6) are respectively rotatably connected to the main bottle bracket (1) and the movable plate (4).

3. The automatic locking bottle holder according to claim 1, wherein an inner side of the main bottle bracket (1) is provided with an enclosure cover plate (7) and a plurality of first non-slip silicone pads (8), and an inner side of the movable plate (4) is provided with a plurality of second non-slip silicone pads (9).

4. The automatic locking bottle holder according to claim 1, wherein an outer side of the main bottle bracket (1) is provided with a plurality of fixed arm snap-in grooves (10) that are compatible with the fixed arm.

5. The automatic locking bottle holder according to claim 1, wherein the mounting adapter plate (2) is disposed on an outer side of the main bottle bracket (1), and the mounting adapter plate (2) is provided with a mounting groove (11) and a plurality of mounting through-holes (12).

6. The automatic locking bottle holder according to claim 5, wherein the mounting groove (11) is embedded with multi-angle adjustment teeth (13).
